# EUROPEAN PATENT APPLICATION

(11) **EP 4 488 028 A1**
(43) Date of publication of application: **08.01.2025**
(21) Application number: 23183315.3
(22) Date of filing: 04.07.2023
(51) Int. Cl.: B29C 44/24, B29C 44/32, D06N 7/00, B29C 43/18, B32B 5/18, B32B 5/20, B32B 27/30, B29K 27/06, B29K 105/26, B29L 9/00, B29L 31/30, B29L 31/00

(54) **METHOD FOR MANUFACTURING A PVC BASED FLOOR COVERING**

(71) Applicant: Beaulieu International Group NV, 8790 Waregem (BE)
(72) Inventor: DE KEYZER, Daan, 8510 Rollegem (BE); MAGHERMAN, Chloë, 8793 Sint-Eloois-Vijve (BE); MISSEEUW, Lara, 9050 Gentbrugge (BE); VIAENE, Herwig, 9700 Oudenaarde (BE)
(74) Representative: De Clercq & Partners

(57) **Abstract**

The present invention relates to a method for manufacturing a multilayer polyvinyl chloride floor covering intermediate sheet or a multilayer PVC floor covering, the floor covering intermediate sheet or the floor covering comprising recycled PVC material. The present invention also relates to an apparatus for manufacturing a multilayer PVC floor covering intermediate sheet or a multilayer PVC floor covering, and to a multilayer PVC floor covering intermediate sheet and a multilayer PVC floor covering obtained thereby.

## Description

### TECHNICAL FIELD

The present invention relates to a method for manufacturing a multilayer polyvinyl chloride (PVC) floor covering intermediate sheet and multilayer PVC floor covering, the multilayer PVC floor covering intermediate sheet and multilayer PVC floor covering comprising recycled polyvinyl chloride material. The present invention also relates to an apparatus for manufacturing a multilayer PVC floor covering intermediate sheet and a multilayer PVC floor covering, and to a multilayer PVC floor covering intermediate sheet and a multilayer PVC floor covering obtained thereby.

### BACKGROUND

Cushion floor coverings are a well-known and popular material today. A wide variety of designs, easy installation, long lifespan, and affordable price make them attractive in the market. Cushion floor coverings are typically made of different layers of PVC based compounds with different material properties per layer. Typically, one or more layers are foamed to a certain extent in order to lower weight per unit area as well as to enhance the properties of the cushion floor covering, such as improvement of acoustics, walking comfort, etc.

However, in a circular and sustainable economy, there is a need to include more recycled materials. With known coating technologies, it is not technically feasible to obtain cushion vinyl floor coverings that have a high percentage of recycled content (>40%) and still comply to quality standards. With known calendering technologies, it is not financially feasible to obtain cushion vinyl floor coverings that have a high percentage of recycled content (>40%) and still comply to quality standards. Although the current calendering technologies offer a wider flexibility for processing raw materials due to melting the compound at high temperatures (>150°C), the products today lack sufficient percentage of recycled content. One of the main reasons are the insecure nature and supply of the recycled content available. Further, also foaming of the product during a calender process in order to obtain the typical cushion vinyl nature has its limits, which is more emphasized when using recycled content. Technical issues may arise from residual blowing agent and foamed particles, which in compact calendering needs to be removed prior to the extruder, e.g. by using special Banbury mixers or de-gassing on the extruder, or chemical deactivation

It is therefore an objective of the current invention to provide a solution for one or more of the above shortcomings. It is an objective to provide a sustainable method for manufacturing a multiplayer PVC floor covering intermediate sheet or a multilayer PVC floor covering with an increased content of recycled PVC. It is an objective to provide a sustainable method for manufacturing a multilayer PVC floor covering intermediate sheet or a multilayer PVC floor covering, preferably working towards a circular economy, thereby reducing the environmental impact. It is an objective to provide a sustainable method for manufacturing a multilayer PVC floor covering intermediate sheet or a multilayer PVC floor covering that reduces virgin fossil-based resource consumption. It is an objective to provide a method for manufacturing a multilayer PVC floor covering intermediate sheet or a multilayer PVC floor covering that is simplified, and that lowers energy and production costs. It is an objective to provide a method for manufacturing a multilayer PVC floor covering intermediate sheet or a multilayer PVC floor covering that allows for increased recycled content. It is an objective to provide such methods, that also result in a multilayer PVC floor covering intermediate sheet or a multilayer PVC floor covering with optimal mechanical properties, insulation, and/or acoustic properties.

### SUMMARY OF THE INVENTION

The invention has for its object to remedy or to reduce at least one of the drawbacks of the prior art, or at least provide a useful alternative to prior art. The object is achieved through features, which are specified in the description below and in the claims that follow.

The invention is defined by the independent patent claims. The dependent claims define advantageous embodiments of the invention.

The inventors have found a production method to produce a floor covering intermediate sheet or a floor covering comprising recycled PVC material. Specifically, the floor covering or intermediate sheet is produced using processing technology, such as calendering, wherein two films, comprising recycled PVC material are produced that are combined to the final floor covering. Typical for the invention is that one or both of the films comprise a blowing agent and that the processing process takes place at a temperature that is below the decomposition temperature of said blowing agent. After the processing, the films are adhered to an intermediate layer, followed by a post-treatment at a higher temperature, in particular at a temperature that is above the decomposition temperature of the blowing agent. As a result, the recycled PVC material in the film is allowed to foam only in this later stage, thereby maintaining the thickness of the film. This method further prevents the technical issues arising from residual blowing agent and foamed particles, which in compact calendering needs to be removed prior to the extruder e.g. by using special Banbury mixers or de-gassing on the extruder, or chemical deactivation.

The present invention thus allows to produce a floor covering or floor covering intermediate sheet that comprises one or two films with recycled PVC content which have an increased thickness due to the post-treatment foaming. To make this possible, a blowing agent is present in one or both films but said blowing agent is only activated after the process during a post-treatment heating step.

The inventors have found that the invention significantly increased the recycled PVC content that could be used. Therefore, this provides a sustainable method for manufacturing a multilayer PVC floor covering intermediate sheet or multilayer PVC floor covering, working towards a circular economy, thereby reducing the environmental impact. This also provides a sustainable method for manufacturing a multilayer PVC floor covering intermediate sheet or multilayer PVC floor covering that reduces virgin fossil-based resource consumption.

The inventors have also found that the invention provides a cost-effective way to combine high recycled content into residential CV flooring, with endless potential in different layers of heterogenous CV. The inventors have also found that the invention allows for a simplified process, which lowers energy and production costs.

Finally, the inventors have found that the formed multilayer PVC floor covering demonstrated improved optimal mechanical properties, as well as improved insulation, and/or acoustic properties.

In a first aspect, the present invention relates to a method for manufacturing a multilayer polyvinyl chloride (PVC) floor covering intermediate sheet, the multilayer PVC floor covering intermediate sheet comprising recycled polyvinyl chloride material. The method preferably comprises the steps of:
- a): providing a first batch of recycled PVC material and a second batch of recycled PVC material;
- b1): mixing the first batch of recycled PVC material with a first blowing agent, the first blowing agent having a predetermined decomposition temperature T_{d1}, to form a first blend;
- b2): optionally, mixing the second batch of recycled PVC material with a second blowing agent, the second blowing agent having a predetermined decomposition temperature T_{d2}, to form a second blend;
- c1): mixing and melting the first blend, below the decomposition temperature of the first blowing agent T_{d1}, to form a first mixture;
- c2): mixing and melting the second batch of recycled PVC material or the second blend, below the decomposition temperature of the second blowing agent T_{d2} if present, to form a second mixture;
- d1): processing the first mixture, below the decomposition temperature of the first blowing agent T_{d1}, to form a first film;
- d2): processing the second mixture, below the decomposition temperature of the second blowing agent T_{d2} if present, to form a second film;
- e): adhering the first film to one side of an intermediate layer, and the second film to the opposing side of the intermediate layer, thereby forming a multilayer structure; and,
- f): heating the multilayer structure to a temperature that is higher than decomposition temperature T_{d1} thereby causing the first film to expand, optionally also higher than the decomposition temperature T_{d2} thereby causing the second film to expand;
thereby forming a multilayer PVC floor covering intermediate sheet.

In some preferred embodiments, the method comprises the steps of:
- b2): mixing the second batch of recycled PVC material with a second blowing agent, the second blowing agent having a predetermined decomposition temperature T_{d2}, to form a second blend;
- c2): mixing and melting the second blend below the decomposition temperature of the second blowing agent T_{d2}, to form a second mixture;
- d2): processing the second mixture, below the decomposition temperature of the second blowing agent T_{d2}, to form a second film; and,
- f): heating the multilayer structure to a temperature that is higher than decomposition temperature T_{d1} and higher than the decomposition temperature T_{d2}, thereby causing the first film and the second film to expand.

In some preferred embodiments, the second batch of recycled PVC material is not mixed with a second blowing agent.

In some preferred embodiments, the recycled PVC material comprises at least 20% recycled PVC, based on the total weight of the recycled PVC material. In some embodiments, the recycled PVC material comprises at least 30% recycled PVC, preferably at least 40% recycled PVC, for example at least 50% recycled PVC.

In some embodiments, the recycled PVC material in the first batch and/or in the second batch each independently comprises at least 20% of recycled PVC, based on the total weight of the recycled PVC material, preferably at least 30% of the recycled PVC, preferably at least 40% recycled PVC, for example at least 50% recycled PVC.

In some embodiments, the multilayer PVC floor covering intermediate sheet comprises at least 50% recycled PVC material, based on the total weight of the multilayer PVC floor covering intermediate sheet, preferably at least 60% recycled PVC material, preferably at least 70% recycled PVC material, more preferably at least 80% recycled PVC material, even more preferably at least 90% PVC material, for example at least 95% recycled PVC material or at least 98% recycled PVC material.

In some embodiments, the multilayer PVC floor covering comprises at least 50% recycled PVC material, based on the total weight of the multilayer PVC floor covering, preferably at least 60% recycled PVC material, preferably at least 70% recycled PVC material, for example at least 80% recycled PVC material.

In some preferred embodiments, the first and second film each comprise at least 50% recycled PVC material, based on the total weight of the first or second film respectively, preferably at least 60% recycled PVC material, preferably at least 70% recycled PVC material, more preferably at least 80% recycled PVC material, more preferably at least 90% recycled PVC material, for example at least 95% recycled PVC material or at least 98% recycled PVC material.

In some preferred embodiments of the methods disclosed herein, in step d1) the first mixture is calendered below the decomposition temperature of the first blowing agent T_{d1}, to form the first film. In some preferred embodiments of the methods disclosed herein, in step d2) the second mixture is calendered below the decomposition temperature of the second blowing agent T_{d2}, to form the second film.

In some embodiments, in the method as disclosed herein, in step c1) the first blend is extruded below the decomposition temperature of the first blowing agent T_{d1}, to form a first extrudate. In some embodiments, in the method as disclosed herein, in step c2) the second batch of recycled PVC material or the second blend is extruded below the decomposition temperature of the second blowing agent T_{d2}, to form a second extrudate.

In some embodiments, the method preferably comprises the steps of:
- a): providing a first batch of recycled PVC material and a second batch of recycled PVC material;
- b1): mixing the first batch of recycled PVC material with a first blowing agent, the first blowing agent having a predetermined decomposition temperature T_{d1}, to form a first blend;
- b2): optionally, mixing the second batch of recycled PVC material with a second blowing agent, the second blowing agent having a predetermined decomposition temperature T_{d2}, to form a second blend;
- c1): extruding the first blend, below the decomposition temperature of the first blowing agent T_{d1}, to form a first extrudate;
- c2): extruding the second batch of recycled polyvinyl material or the second blend, below the decomposition temperature of the second blowing agent T_{d2} if present, to form a second extrudate;
- d1): processing, preferably calendering, the first extrudate, below the decomposition temperature of the first blowing agent T_{d1}, to form a first film;
- d2): processing, preferably calendering, the second extrudate, below the decomposition temperature of the second blowing agent T_{d2} if present, to form a second film;
- e): adhering the first film to one side of an intermediate layer, and the second film to the opposing side of the intermediate layer, thereby forming a multilayer structure; and,
- f): heating the multilayer structure to a temperature that is higher than decomposition temperature T_{d1} thereby causing the first film to expand, optionally also higher than the decomposition temperature T_{d2} thereby causing the second film to expand;
thereby forming a multilayer PVC floor covering intermediate sheet.

In some preferred embodiments, the first and/or second blowing agent is selected from the group comprising: azodicarbonamide (AZO), 4,4-oxy-bis(benzenesulfonylhydrazide) (OBSH), P-toluenesulfonyl-hydrazide (TSH), P-tolyenesulfonylsemicarbazide (PTSS), dinitrosopentamethylenetetramine (DNPT), sodium bicarbonate, 5-phenyltetrazole (PT), or any combinations thereof; preferably the first and/or second blowing agent is AZO. In some embodiments, the blowing agent is essentially free from kickers.

In some embodiments, step e) is performed as a one-step process. In some embodiments, step e) is performed as a two-step process. In some embodiments, step e) is performed as a multi-step process.

In some preferred embodiments, step e) comprises the step of adhering a decorative layer to the second film, to form a multilayer structure, prior to performing step f).

In some preferred embodiments, step e) comprises the step of printing a print layer or a print pattern to the second film or to the decorative layer, to form a multilayer structure, prior to performing step f).

In some embodiments, step e) comprises the step of adhering a wear layer, preferably to the print layer or the print pattern or to the decorative layer, to form a multilayer structure, prior to performing step f). In some further embodiments, step e) comprises the step of adhering a lacquer layer, preferably to the wear layer, to form a multilayer structure, prior to performing step f).

In some preferred embodiments, step e) comprises the step of adhering a backing layer to the first film, to form a multilayer structure, prior to performing step f), and wherein after step f) a multilayer PVC floor covering is formed.

In some embodiments, the methods of the present invention result in the manufacture of a multilayer PVC floor covering intermediate sheet comprising a first film, a second film and an intermediate layer located in between said first and second film. In some embodiments, the intermediate sheet further comprises a decorative layer, which is preferably adhered to the second film. In some embodiments, the intermediate sheet further comprises a print layer or print pattern, which is preferably printed on the decorative layer. In some embodiments, the intermediate sheet does not comprise a decorative layer and the print layer or print pattern is printed on the second film. In some embodiments, the intermediate sheet comprises a wear layer, which is preferably adhered to the print layer or print pattern. In some embodiments, the intermediate sheet comprises a lacquer layer, which is preferably adhered to the wear layer. In some embodiments, the intermediate sheet comprises a backing layer, which is preferably adhered to the first film.

In some embodiments, methods are provided for the manufacture of a multilayer PVC floor covering, said floor covering comprising at least a backing layer, a first film, an intermediate layer, a second film, optionally a print layer or print pattern, and optionally a wear layer.

In some preferred embodiments, the intermediate layer comprises glass fibres or PET. In some embodiments, the glass fibres are comprised in a glass fibre fabric, web, or fleece, such as for example, a nonwoven.

In a second aspect, the invention relates to an apparatus or production line for manufacturing a multilayer PVC floor covering intermediate sheet or a multilayer PVC floor covering, wherein the apparatus or production line is configured for performing a method according to the first aspect, and (preferred) embodiments thereof.

In a third aspect, the invention relates to a multilayer PVC floor covering intermediate sheet or a multilayer PVC floor covering obtained by the method according to the first aspect, and (preferred) embodiments thereof; or obtained by using the apparatus or production line according to the second aspect, and (preferred) embodiments thereof.

### DETAILED DESCRIPTION OF THE FIGURES

In the following is described examples of preferred embodiments illustrated in the accompanying drawings, wherein:

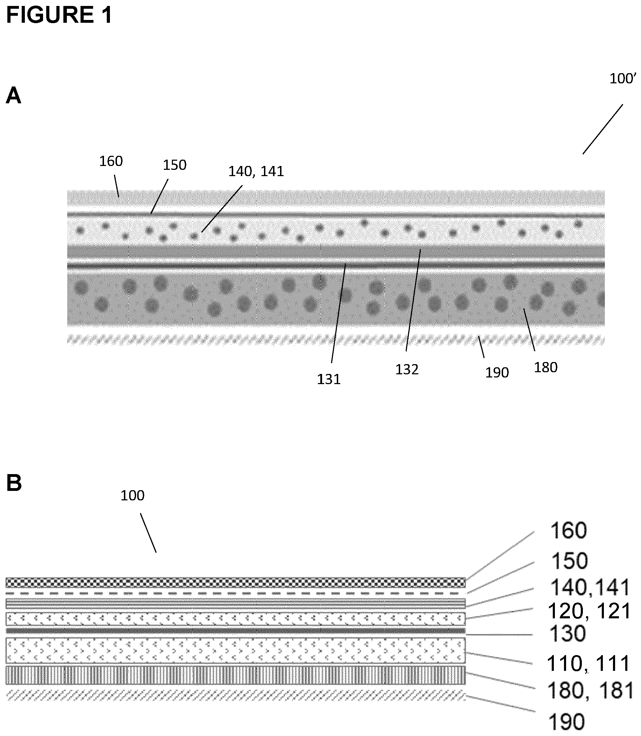

FIG. 1A illustrates a cross-section of a multilayer PVC floor covering (100') manufactured according to the prior art. The multilayer PVC floor covering (100') comprises, from top to bottom: a wear layer (160), a print layer (150), a decorative layer which may be optionally foamed (140, 141), an impregnation layer (132) and an intermediate layer (131) comprising a glass fibre or PET layer, a backing layer (180), and optionally a needle felt layer (190).
FIG. 1B illustrates a cross-section of a multilayer PVC floor covering (100) manufactured according an embodiment of the invention. The multilayer PVC floor covering (100) comprises, from top to bottom: a wear layer (160), a print layer (150), a decorative layer which may be optionally foamed (140, 141), an expanded second film comprising recycled PVC (121), an intermediate layer (130) comprising a glass fibre or PET layer (131), an expanded first film comprising recycled PVC (111), and (optionally) a backing layer (180) (optionally) comprising recycled PVC, and optionally a needle felt layer (190). The entire multilayer PVC floor covering (100) comprises a percentage of recycled PVC calculated as follows: sum of the weight of recycled PVC in all layers, divided by the total weight of the multilayer PVC floor covering (100).

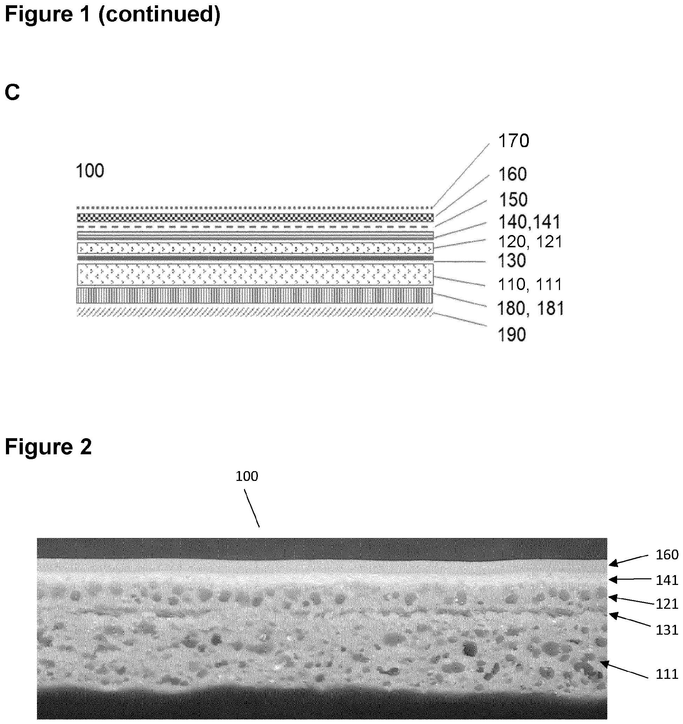

FIG. 1C illustrates a cross-section of a multilayer PVC floor covering (100) manufactured according an embodiment of the invention. The multilayer PVC floor covering (100) comprises, from top to bottom: a lacquer layer (170), a wear layer (160), a print layer (150), a decorative layer which may be optionally foamed (140, 141), an expanded second film comprising recycled PVC (121), an intermediate layer (130) comprising a glass fibre or PET layer (131), an expanded first film comprising recycled PVC (111), and (optionally) a backing layer (180) (optionally) comprising recycled PVC, and optionally a needle felt layer (190). The entire multilayer PVC floor covering (100) comprises a percentage of recycled PVC calculated as follows: sum of the weight of recycled PVC in all layers, divided by the total weight of the multilayer PVC floor covering (100).

**FIG.** 2 illustrates a microscopic view of a transversal section of a multilayer PVC floor covering intermediate sheet (101) manufactured according to an embodiment of the invention. The multilayer cushion vinyl floor covering intermediate sheet (101) comprises an intermediate layer that consists of a glass fibre (131)). The multilayer PVC floor covering intermediate sheet (101) comprises an expanded first film (111) on one side of the intermediate layer and an expanded second film (121) on the other side of the intermediate layer. The multilayer PVC floor covering intermediate sheet (101) also comprises an expanded decorative layer (141) and a wear layer (160) on top of the decor layer(141).

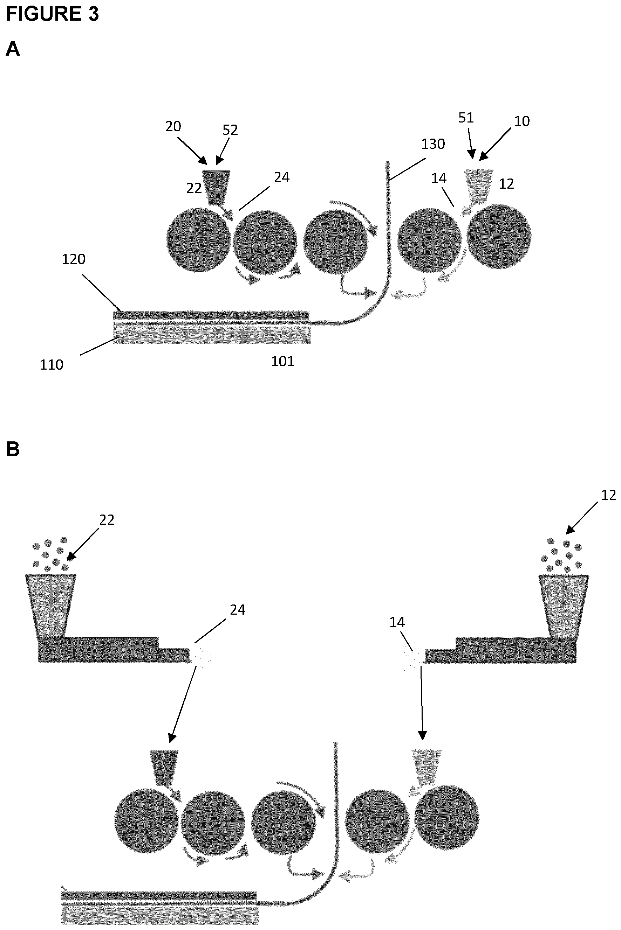

FIG. 3 illustrates a schematic view of steps a)-d) of method according to an embodiment of the invention.

The following, non-limiting, reference numbers may be used in the figures:
10 - first batch of recycled PVC material
12 - first blend comprising the first batch of recycled PVC material and a first blowing agent
14 - first extrudate
20 - second batch of recycled PVC material
22 - second blend comprising the second batch of recycled PVC material and optionally a second blowing agent
24 - second extrudate
51 - first blowing agent
52 - second blowing agent
100 - multilayer PVC floor covering (typically the finished product)
101 - multilayer PVC floor covering intermediate sheet (typically an intermediate product)
110 - first film before expansion
111 - first film after expansion
120 - second film before expansion
121 - second film after expansion
130 - intermediate layer
131 - glass fibre layer
132 - impregnation layer(s)
140 - decorative layer before expansion
141 - decorative layer after expansion
150 - print layer
160 - wear layer
170 - lacquer layer
180 - backing layer
190 - needle felt layer

Any positional indications refer to the position shown in the figures. In the figures, same or corresponding elements are indicated by same reference numerals. For clarity reasons, some elements may in some of the figures be without reference numerals. A person skilled in the art will understand that the figures are just principal drawings. The relative proportions of individual elements may also be distorted.

### DETAILED DESCRIPTION OF THE INVENTION

When describing the invention, the terms used are to be construed in accordance with the following definitions, unless the context dictates otherwise.

As used herein, the singular forms "a", "an", and "the" include both singular and plural referents unless the context clearly dictates otherwise. By way of example, "a resin" means one resin or more than one resin.

The terms "comprising", "comprises" and "comprised of" as used herein are synonymous with "including", "includes" or "containing", "contains", and are inclusive or open-ended and do not exclude additional, non-recited members, elements, or method steps. It will be appreciated that the terms "comprising", "comprises" and "comprised of" as used herein comprise the terms "consisting of", "consists" and "consists of".

The recitation of numerical ranges by endpoints includes all integer numbers and, where appropriate, fractions subsumed within that range (e.g., 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g., from 1.0 to 5.0 includes both 1.0 and 5.0). Any numerical range recited herein is intended to include all sub-ranges subsumed therein.

All references cited in the present specification are hereby incorporated by reference in their entirety. In particular, the teachings of all references herein specifically referred to are incorporated by reference.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some, but not other features included in other embodiments, combinations of features of different embodiments are meant to be within the scope of the invention, and form different embodiments, as would be understood by those in the art.

Unless defined otherwise, percentages are percentages by weight, based on the total weight of the composition or article referred to. For example, a composition comprising 50.0% PVC, refers to 50.0 wt% PVC based on the total weight of the composition. On the other hand, a floor covering comprising 50.0% PVC, refers to 50.0 wt% PVC based on the total weight of the floor covering, including all layers.

The terms described above, and others used in the specification are well understood to those skilled in the art.

Preferred statements (features) and embodiments, resins, articles, methods, and uses of this invention are set herein below. Each statement and embodiment of the invention so defined may be combined with any other statement and/or embodiment unless clearly indicated to the contrary. In particular, any feature indicated as being preferred or advantageous may be combined with any other feature or features or statements indicated as being preferred or advantageous.

The independent and dependent claims set out particular and preferred features of the invention. Features from the dependent claims may be combined with features of the independent or other dependent claims as appropriate.

The present invention will now be further described. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

In a first aspect, the present invention relates to a method for manufacturing a multilayer PVC floor covering intermediate sheet, the multilayer PVC floor covering intermediate sheet comprising recycled PVC material. The method preferably comprises the steps of:
- a): providing a first batch of recycled PVC material and a second batch of recycled PVC material;
- b1): mixing the first batch of recycled PVC material with a first blowing agent, the first blowing agent having a predetermined decomposition temperature T_{d1}, to form a first blend;
- b2): optionally, mixing the second batch of recycled PVC material with a second blowing agent, the second blowing agent having a predetermined decomposition temperature T_{d2}, to form a second blend;
- c1): mixing and melting (preferably extruding) the first blend, below the decomposition temperature of the first blowing agent T_{d1}, to form a first mixture (preferably wherein the first mixture is a first extrudate);
- c2): mixing and melting (preferably extruding) the second batch of recycled PVC material or the second blend, below the decomposition temperature of the second blowing agent T_{d2} if present, to form a second mixture (preferably wherein the second mixture is a second extrudate);
- d1): processing (preferably calendering) the first mixture, below the decomposition temperature of the first blowing agent T_{d1}, to form a first film;
- d2): processing (preferably calendering) the second mixture, below the decomposition temperature of the second blowing agent T_{d2} if present, to form a second film;
- e): adhering the first film to one side of an intermediate layer, and the second film to the opposing side of the intermediate layer, thereby forming a multilayer structure; and,
- f): heating the multilayer structure to a temperature that is higher than decomposition temperature T_{d1} thereby causing the first film to expand, optionally also higher than the decomposition temperature T_{d2} thereby causing the second film to expand;
thereby forming a multilayer PVC floor covering intermediate sheet.

As used herein, the term "PVC floor covering" may also be referred to as "a floor covering comprising PVC", or "sheet vinyl" or "flexible vinyl".

In some preferred embodiments, the method comprises the steps of:
- b2): mixing the second batch of recycled PVC material with a second blowing agent, the second blowing agent having a predetermined decomposition temperature T_{d2}, to form a second blend;
- c2): mixing and melting (preferably extruding) the second blend below the decomposition temperature of the second blowing agent T_{d2}, to form a second mixture (preferably wherein the second mixture is a second extrudate);
- d2): processing (preferably calendering) the second mixture, below the decomposition temperature of the second blowing agent T_{d2}, to form a second film; and,
- f): heating the multilayer structure to a temperature that is higher than decomposition temperature T_{d1} and higher than the decomposition temperature T_{d2}, thereby causing the first film and the second film to expand.

In such embodiments, the method preferably comprises the steps of:
- a): providing a first batch of recycled PVC material and a second batch of recycled PVC material;
- b1): mixing the first batch of recycled PVC material with a first blowing agent, the first blowing agent having a predetermined decomposition temperature T_{d1}, to form a first blend;
- b2): mixing the second batch of recycled PVC material with a second blowing agent, the second blowing agent having a predetermined decomposition temperature T_{d2}, to form a second blend;
- c1): mixing and melting (preferably extruding) the first blend, below the decomposition temperature of the first blowing agent T_{d1}, to form a first mixture (preferably wherein the first mixture is a first extrudate);
- c2): mixing and melting (preferably extruding) the second blend below the decomposition temperature of the second blowing agent T_{d2}, to form a second mixture (preferably wherein the second mixture is a second extrudate);
- d1): processing (preferably calendering) the first mixture, below the decomposition temperature of the first blowing agent T_{d1}, to form a first film;

- d2): processing (preferably calendering) the second mixture, below the decomposition temperature of the second blowing agent T_{d2} if present, to form a second film;
- e): adhering the first film to one side of an intermediate layer, and the second film to the opposing side of the intermediate layer, thereby forming a multilayer structure; and,
- f): heating the multilayer structure to a temperature that is higher than decomposition temperature T_{d1} and higher than the decomposition temperature T_{d2}, thereby causing the first film and the second film to expand;
thereby forming a multilayer PVC floor covering intermediate sheet.

In some preferred embodiments, the second batch of recycled PVC material is not mixed with a second blowing agent.

In such embodiments, the method comprises the steps of:
- a): providing a first batch of recycled PVC material and a second batch of recycled polyvinyl material;
- b1): mixing the first batch of recycled PVC material with a first blowing agent, the first blowing agent having a predetermined decomposition temperature T_{d1}, to form a first blend;
- c1): mixing and melting (preferably extruding) the first blend, below the decomposition temperature of the first blowing agent T_{d1}, to form a first mixture (preferably wherein the first mixture is a first extrudate);
- c2): mixing and melting (preferably extruding) the second batch of recycled PVC material, to form a second mixture (preferably wherein the second mixture is a second extrudate);
- d1): processing (preferably calendering) the first mixture, below the decomposition temperature of the first blowing agent T_{d1}, to form a first film;
- d2): processing (preferably calendering) the second mixture, to form a second film;
- e): adhering the first film to one side of an intermediate layer, and the second film to the opposing side of the intermediate layer, thereby forming a multilayer structure; and,
- f): heating the multilayer structure to a temperature that is higher than decomposition temperature T_{d1} thereby causing the first film to expand;
thereby forming a multilayer PVC floor covering intermediate sheet.

In some embodiments, the methods as disclosed herein in step c1) the first blend is extruded below the decomposition temperature of the first blowing agent T_{d1}, to form a first extrudate and in step d1) said first extrudate is processed (preferably calendered) below the decomposition temperature of the first blowing agent T_{d1}, to form the first film.

In some embodiments, the methods as disclosed herein in step c2) the second blend is extruded below the decomposition temperature of the second blowing agent T_{d2}, to form a second extrudate and in step d2) said second extrudate is processed (preferably calendered) below the decomposition temperature of the second blowing agent T_{d2}, to form the second film.

In such embodiments, the method comprises the steps of:
- a): providing a first batch of recycled PVC material and a second batch of recycled PVC material;
- b1): mixing the first batch of recycled PVC material with a first blowing agent, the first blowing agent having a predetermined decomposition temperature T_{d1}, to form a first blend;
- b2): optionally, mixing the second batch of recycled PVC material with a second blowing agent, the second blowing agent having a predetermined decomposition temperature T_{d2}, to form a second blend;
- c1): extruding the first blend, below the decomposition temperature of the first blowing agent T_{d1}, to form a first extrudate;
- c2): extruding the second batch of recycled PVC material or the second blend, below the decomposition temperature of the second blowing agent T_{d2} if present, to form a second extrudate;
- d1): processing (preferably calendering) the first extrudate, below the decomposition temperature of the first blowing agent T_{d1}, to form a first film;
- d2): processing (preferably calendering) the second extrudate, below the decomposition temperature of the second blowing agent T_{d2} if present, to form a second film;
- e): adhering the first film to one side of an intermediate layer, and the second film to the opposing side of the intermediate layer, thereby forming a multilayer structure; and,
- f): heating the multilayer structure to a temperature that is higher than decomposition temperature T_{d1} thereby causing the first film to expand, optionally also higher than the decomposition temperature T_{d2} thereby causing the second film to expand;
thereby forming a multilayer PVC floor covering intermediate sheet.

In some preferred embodiments, the method comprises the steps of:
- b2): mixing the second batch of recycled PVC material with a second blowing agent, the second blowing agent having a predetermined decomposition temperature T_{d2}, to form a second blend;
- c2): extruding the second blend below the decomposition temperature of the second blowing agent T_{d2}, to form a second extrudate;
- d2): processing (preferably calendering) the second mixture, below the decomposition temperature of the second blowing agent T_{d2}, to form a second film; and,
- f): heating the multilayer structure to a temperature that is higher than decomposition temperature T_{d1} and higher than the decomposition temperature T_{d2}, thereby causing the first film and the second film to expand.

In some embodiments, the method preferably comprises the steps of:
- a): providing a first batch of recycled PVC material and a second batch of recycled PVC material;
- b1): mixing the first batch of recycled PVC material with a first blowing agent, the first blowing agent having a predetermined decomposition temperature T_{d1}, to form a first blend;
- b2): mixing the second batch of recycled PVC material with a second blowing agent, the second blowing agent having a predetermined decomposition temperature T_{d2}, to form a second blend;
- c1): extruding the first blend, below the decomposition temperature of the first blowing agent T_{d1}, to form a first extrudate;
- c2): extruding the second blend below the decomposition temperature of the second blowing agent T_{d2}, to form a second extrudate;
- d1): processing (preferably calendering) the first mixture, below the decomposition temperature of the first blowing agent T_{d1}, to form a first film;
- d2): processing (preferably calendering) the second mixture, below the decomposition temperature of the second blowing agent T_{d2} if present, to form a second film;
- e): adhering the first film to one side of an intermediate layer, and the second film to the opposing side of the intermediate layer, thereby forming a multilayer structure; and,
- f): heating the multilayer structure to a temperature that is higher than decomposition temperature T_{d1} and higher than the decomposition temperature T_{d2}, thereby causing the first film and the second film to expand;
thereby forming a multilayer PVC floor covering intermediate sheet.

In the methods as taught herein, the processing of the first or second mixture or of the first or second extrudate in steps d1) or d2) can be performed by any technology that results in the formation of a film. In some embodiments, the processing of the first or second mixture or of the first or second extrudate in steps d1) or d2) is performed using calendering technology or double-belt press technology. In some preferred embodiments, calendering technology is used.

In such embodiments, the method comprises the steps of:
- a): providing a first batch of recycled PVC material and a second batch of recycled PVC material;
- b1): mixing the first batch of recycled PVC material with a first blowing agent, the first blowing agent having a predetermined decomposition temperature T_{d1}, to form a first blend;
- b2): optionally, mixing the second batch of recycled PVC material with a second blowing agent, the second blowing agent having a predetermined decomposition temperature T_{d2}, to form a second blend;
- c1): mixing and melting (preferably extruding) the first blend, below the decomposition temperature of the first blowing agent T_{d1}, to form a first mixture (preferably wherein the first mixture is a first extrudate);
- c2): mixing and melting (preferably extruding) the second batch of recycled PVC material or the second blend, below the decomposition temperature of the second blowing agent T_{d2} if present, to form a second mixture (preferably wherein the second mixture is a second extrudate);
- d1): calendering the first mixture, below the decomposition temperature of the first blowing agent T_{d1}, to form a first film;
- d2): calendering the second mixture, below the decomposition temperature of the second blowing agent T_{d2} if present, to form a second film;
- e): adhering the first film to one side of an intermediate layer, and the second film to the opposing side of the intermediate layer, thereby forming a multilayer structure; and,
- f): heating the multilayer structure to a temperature that is higher than decomposition temperature T_{d1} thereby causing the first film to expand, optionally also higher than the decomposition temperature T_{d2} thereby causing the second film to expand;
thereby forming a multilayer PVC floor covering intermediate sheet.

In some preferred embodiments, the method comprises the steps of:
- b2): mixing the second batch of recycled PVC material with a second blowing agent, the second blowing agent having a predetermined decomposition temperature T_{d2}, to form a second blend;
- c2): mixing and melting (preferably extruding) the second blend below the decomposition temperature of the second blowing agent T_{d2}, to form a second mixture (preferably wherein the second mixture is a second extrudate);
- d2): calendering the second mixture, below the decomposition temperature of the second blowing agent T_{d2}, to form a second film; and,
- f): heating the multilayer structure to a temperature that is higher than decomposition temperature T_{d1} and higher than the decomposition temperature T_{d2}, thereby causing the first film and the second film to expand.

In some embodiments, the method preferably comprises the steps of:
- a): providing a first batch of recycled PVC material and a second batch of recycled PVC material;
- b1): mixing the first batch of recycled PVC material with a first blowing agent, the first blowing agent having a predetermined decomposition temperature T_{d1}, to form a first blend;
- b2): mixing the second batch of recycled PVC material with a second blowing agent, the second blowing agent having a predetermined decomposition temperature T_{d2}, to form a second blend;
- c1): mixing and melting (preferably extruding) the first blend, below the decomposition temperature of the first blowing agent T_{d1}, to form a first mixture (preferably wherein the first mixture is a first extrudate);
- c2): mixing and melting (preferably extruding) the second blend below the decomposition temperature of the second blowing agent T_{d2}, to form a second mixture (preferably wherein the second mixture is a second extrudate);
- d1): calendering the first mixture, below the decomposition temperature of the first blowing agent T_{d1}, to form a first film;
- d2): calendering the second mixture, below the decomposition temperature of the second blowing agent T_{d2} if present, to form a second film;
- e): adhering the first film to one side of an intermediate layer, and the second film to the opposing side of the intermediate layer, thereby forming a multilayer structure; and,
- f): heating the multilayer structure to a temperature that is higher than decomposition temperature T_{d1} and higher than the decomposition temperature T_{d2}, thereby causing the first film and the second film to expand;
thereby forming a multilayer PVC floor covering intermediate sheet.

In some preferred embodiments, the method comprises the steps of:
- a): providing a first batch of recycled PVC material and a second batch of recycled PVC material;
- b1): mixing the first batch of recycled PVC material with a first blowing agent, the first blowing agent having a predetermined decomposition temperature T_{d1}, to form a first blend;
- b2): optionally, mixing the second batch of recycled PVC material with a second blowing agent, the second blowing agent having a predetermined decomposition temperature T_{d2}, to form a second blend;
- c1): extruding the first blend, below the decomposition temperature of the first blowing agent T_{d1}, to form a first extrudate;
- c2): extruding the second batch of recycled PVC material or the second blend, below the decomposition temperature of the second blowing agent T_{d2} if present, to form a second extrudate;
- d1): calendering the first extrudate, below the decomposition temperature of the first blowing agent T_{d1}, to form a first film;
- d2): calendering the second extrudate, below the decomposition temperature of the second blowing agent T_{d2} if present, to form a second film;
- e): adhering the first film to one side of an intermediate layer, and the second film to the opposing side of the intermediate layer, thereby forming a multilayer structure; and,
- f): heating the multilayer structure to a temperature that is higher than decomposition temperature T_{d1} thereby causing the first film to expand, optionally also higher than the decomposition temperature T_{d2} thereby causing the second film to expand;
thereby forming a multilayer PVC floor covering intermediate sheet.

In some preferred embodiments, the method comprises the steps of:
- b2): mixing the second batch of recycled PVC material with a second blowing agent, the second blowing agent having a predetermined decomposition temperature T_{d2}, to form a second blend;
- c2): extruding the second blend below the decomposition temperature of the second blowing agent T_{d2}, to form a second extrudate;
- d2): calendering the second extrudate, below the decomposition temperature of the second blowing agent T_{d2}, to form a second film; and,
- f): heating the multilayer structure to a temperature that is higher than decomposition temperature T_{d1} and higher than the decomposition temperature T_{d2}, thereby causing the first film and the second film to expand.

In some embodiments, the method preferably comprises the steps of:
- a): providing a first batch of recycled PVC material and a second batch of recycled PVC material;
- b1): mixing the first batch of recycled PVC material with a first blowing agent, the first blowing agent having a predetermined decomposition temperature T_{d1}, to form a first blend;
- b2): mixing the second batch of recycled PVC material with a second blowing agent, the second blowing agent having a predetermined decomposition temperature T_{d2}, to form a second blend;
- c1): extruding the first blend, below the decomposition temperature of the first blowing agent T_{d1}, to form a first extrudate;
- c2): extruding the second blend below the decomposition temperature of the second blowing agent T_{d2}, to form a second extrudate;
- d1): calendering the first extrudate, below the decomposition temperature of the first blowing agent T_{d1}, to form a first film;
- d2): calendering the second extrudate, below the decomposition temperature of the second blowing agent T_{d2} if present, to form a second film;
- e): adhering the first film to one side of an intermediate layer, and the second film to the opposing side of the intermediate layer, thereby forming a multilayer structure; and,
- f): heating the multilayer structure to a temperature that is higher than decomposition temperature T_{d1} and higher than the decomposition temperature T_{d2}, thereby causing the first film and the second film to expand;
thereby forming a multilayer PVC floor covering intermediate sheet.

In some embodiments, the first batch of recycled PVC material has the same source and/or composition as the second batch of recycled PVC material. In some embodiments, the first batch of recycled PVC material has a different source and/or composition as the second batch of recycled PVC material.

In some preferred embodiments, the recycled PVC material comprises at least 20% recycled PVC, based on the total weight of the recycled PVC material. In some preferred embodiments, the recycled PVC material comprises at least 30% recycled PVC, based on the total weight of the recycled PVC material, preferably at least 40% recycled PVC, more preferably at least 50% recycled PVC, more preferably at least 60% recycled PVC. For example, the recycled PVC material may comprise 20%, 30%, 40%, or 50% recycled PVC based on the total weight of the recycled PVC material.

In some embodiments, the recycled PVC material comprises recycled PVC and one or more other compounds, such as fillers and/or plasticizers.

In some preferred embodiments, the multilayer PVC floor covering intermediate sheet or the multilayer PVC floor covering comprises at least 50% recycled PVC material, based on the total weight of the multilayer PVC floor covering intermediate sheet or the multilayer PVC floor covering, preferably at least 60% recycled PVC material, preferably at least 70% recycled PVC material, more preferably at least 80% recycled PVC material, even more preferably at least 90% recycled PVC material, such as for example 90%, or 95% or 98% recycled PVC material. In some preferred embodiments, the multilayer PVC floor covering intermediate sheet or the multilayer PVC floor covering comprises at least 50% total recycled content, based on the total weight of the multilayer PVC floor covering intermediate sheet or the multilayer PVC floor covering, preferably at least 60% total recycled content, preferably at least 70% total recycled content, more preferably at least 80% total recycled content, even more preferably at least 90% total recycled content, such as for example 90%, or 95% or 98% total recycled content.

For example, if the first film, the second film, and the backing layer all comprise recycled PVC material, the entire multilayer PVC floor covering comprises a percentage of recycled PVC material calculated as follows: sum of the weight of recycled PVC material in the expanded first film, in the expanded second film, and in the backing layer, divided by the total weight of the multilayer PVC floor covering.

In some embodiments, the first film comprises at least 50% recycled PVC material, based on the total weight of the first film, preferably at least 60% recycled PVC material, preferably at least 70% recycled PVC material, more preferably at least 80% recycled PVC material, even more preferably at least 90% recycled PVC material, such as for example at least 95% or at least 98% recycled PVC material.

In some embodiments, the second film comprises at least 50% recycled PVC material, based on the total weight of the second film, preferably at least 60% recycled PVC material, preferably at least 70% recycled PVC material, more preferably at least 80% recycled PVC material, even more preferably at least 90% recycled PVC material, such as for example at least 95% or at least 98% recycled PVC material.

In some preferred embodiments, the first and second film each comprise at least 50% recycled PVC material, based on the total weight of the first or second film respectively, preferably at least 60% recycled PVC material, preferably at least 70% recycled PVC material, more preferably at least 80% recycled PVC material, even more preferably at least 90% recycled PVC material, such as for example at least 95% or at least 98% recycled PVC material.

In some preferred embodiments, the first and/or second film each comprise at least 50% total recycled content, based on the total weight of the first and/or second film respectively, preferably at least 60% total recycled content, preferably at least 70% total recycled content, more preferably at least 80% total recycled content, even more preferably at least 90% total recycled content, such as for example at least 95% or at least 98% total recycled content.

As used herein, the terms "blowing agent" and "foaming agent" may be used interchangeable, and refer to a chemical substance or mixture that is capable of generating gas, typically carbon dioxide, nitrogen, or water vapor, within a polymer matrix or other material, resulting in the formation of a cellular structure. This cellular structure, also referred to as foam, reduces the density of the material and provides desirable properties such as thermal and acoustic insulation, cushioning, and impact resistance. The blowing agent is preferably activated by heat.

In some embodiments, the first blowing agent is the same as the second blowing agent. In some embodiments, the first blowing agent is different from the second blowing agent. In some embodiments, the decomposition temperature T_{d1} is the same as the decomposition temperature T_{d2}.

In some preferred embodiments, the first and/or second blowing agent is selected from the group comprising: azodicarbonamide (AZO), 4,4-oxy-bis(benzenesulfonylhydrazide) (OBSH), P-toluenesulfonyl-hydrazide (TSH), P-tolyenesulfonylsemicarbazide (PTSS), dinitrosopentamethylenetetramine (DNPT), sodium bicarbonate, 5-phenyltetrazole (PT), or any combinations thereof; preferably the first and/or second blowing agent is AZO.

The decomposition temperatures T_{d1} and/or T_{d2} are higher than the working temperatures in steps c1), c2), d1), and d2). In some embodiments, the decomposition temperatures T_{d1} is higher than the working temperatures in steps c1), c2), d1), and d2). In some embodiments, the decomposition temperatures T_{d1} and T_{d2} are higher than the working temperatures in steps c1), c2), d1), and d2). The decomposition temperatures T_{d1} and/or T_{d2} are at least 5°C higher than the working temperatures in steps c1), c2), d1), and d2), preferably at least 10°C higher, preferably at least 15°C higher, for example at least 20°C higher.

In some embodiments, the first and/or second films are essentially free from kickers. In some embodiments, the blowing agent does not comprise a kicker.

As used herein, the term "kicker" refers to a chemical substance or mixture that is used in combination with the blowing agent to promote the reaction that generates gas within the material. In the presence of a kicker, the activation temperature or decomposition temperature of a blowing agent is lowered. Examples of kickers include catalysts, activators, initiators, accelerators, and crosslinkers.

The inventors have found that if a kicker is added to the blowing agent, the blend may already start foaming in (or after) the extruder. Since the film forming process, such as the calendering process still needs to take place, it will degenerate the foam structure that has already been formed, resulting in a compact film that has lost all advantageous properties of the foam. In the absence of a kicker, the decomposition temperature of the blowing agent remains higher, and activation will not yet occur in the extruder or calender, allowing the film to start activation only in a later stage in the process, thereby fully maintaining the foam structure.

In some alternative embodiments, the first and/or second films comprise a kicker. In some embodiments, the blowing agent comprises a kicker.

In some embodiments, the method comprises the step of adhering further layers to the first film and/or the second film, thereby forming a multilayer PVC floor covering. In some embodiments, step e) comprises the step of adhering further layers to the first film and/or the second film, to form a multilayer structure, prior to performing step f).

In some embodiments, the method comprises the step of adhering a decorative layer to the first film or the second film. In some preferred embodiments, step e) comprises the step of adhering a decorative layer to the first film or the second film, to form a multilayer structure, prior to performing step f).

In some embodiments, the floor covering or floor covering intermediate sheet may comprise a decorative layer. The term "decorative layer", "décor layer", "decorative sheet", or "decorative film" refers to a layer to which a print layer or print pattern can be applied. The decorative layer is typically white. In some embodiments, the decorative layer comprises PVC and one or more plasticizers. In some embodiments, the decorative layer comprises recycled PVC material.

In some embodiments, a print layer or a print pattern is printed to the decorative layer. In some embodiments, the printing layer or printing pattern is printed on the second film. A white layer may be printed as an alternative to providing a decorative layer. The printing layer or printing pattern can for example be applied to the decorative layer by rotogravure, digital printing, etc. In some embodiments, a wear layer is applied on the printing layer or the printing pattern that is printed on the decorative layer or on the second film. When choosing a suitable material for the wear layer, high transparency and lack of own colour are preferred features. Such a film allows to protect a printed layer from wearing out. Lack of base film colour is important to obtain a design without any colour deviations. Most preferably, the wear layer and/or the decorative layer comprise PVC.

In some embodiments, the method thus comprises the step of adhering a print layer or a print pattern to the decorative layer or to the second film. In some preferred embodiments, step e) comprises the step of adhering a print layer or print pattern to the decorative layer or to the second film, to form a multilayer structure, prior to performing step f).

In some embodiments, the method thus comprises the step of adhering a wear layer to the print layer or print pattern. In some embodiments, step e) comprises the step of adhering a wear layer to the print layer or print pattern, to form a multilayer structure, prior to performing step f).

In some embodiments, a lacquer layer is applied onto the wear layer prior to or after manufacturing of the floor covering according to the invention. The lacquer layer may be seen as an additional layer, or as part of the decorative layer. The lacquer layer may be a polyurethane (PU) lacquer layer. A lacquer layer may enhance scratch resistance, peeling resistance, UV resistance, and/or reduce gloss.

In some embodiments, the method comprises the step of adhering a backing layer to the first film or the second film. In some preferred embodiments, step e) comprises the step of adhering a backing layer to the first film or the second film, to form a multilayer structure, prior to performing step f). In preferred embodiments, the backing layer is adhered to the first film.

The term "backing layer", "backing sheet", or "backing film" refers to a layer that may be used as a backing. The backing layer is preferably not a calendered layer.

The backing layer may comprise an additional PVC based layer, optionally foamed. The floor covering may comprise a non-woven layer, such as a non-woven polyester layer, PVC based layer, polypropylene based layer, in addition to the backing layer. The backing layer may comprise additional sublayers as a back print. Non-woven polyester backing layers of any desired density and colour are very well known by those skilled in the art. As used herein, the term "non-woven" refers to a sheet of fibres, continuous filaments, or chopped yams of any nature or origin, that have been formed into a web by any means, and bonded together by any means. Composite structures may be considered non-woven provided their mass is constituted of at least 50% of non-woven as per to the above definition, or if the non-woven component plays a prevalent role.

In some embodiments, the method comprises the step of adhering a needle felt layer to the backing layer. In some embodiments, step e) comprises the step of adhering a needle felt layer to the backing layer, to form a multilayer structure, prior to performing step f). The presence of the needle felt layer provides several advantages, such as improved acoustic properties and no need to use an adhesive for installation of the floor covering.

The intermediate layer may act as a carrier or substrate material for the first film and the second film. The carrier or substrate material becomes a core layer of the product and may serve two main purposes:
- as a platform for first and second film;
- to prevent the whole product from heat shrinkage during the "oven stage"; and,
- to ensure dimensional stability of the product.

The intermediate layer may comprise any material, such as a thermoplastic polymer that has a melting temperature that is higher than the melting temperature of the recycled polyvinyl material, or a thermoplastic polymer that has a melting temperature that is higher than the melting temperature of the first film and higher than the melting temperature of the second film, for example at least 160°C. In some embodiments, the intermediate layer comprises material selected from the group comprising: glass fibres, polyamides, or polyesters, such as PET. In some preferred embodiments, the intermediate layer comprises glass fibres or PET. Optionally, the intermediate layer comprises multiple materials, such as glass fibres combined with paper pulp, or a blend of paper, glass, and polyester glass.

In some embodiments, the intermediate layer comprises a continuous layer, such as a glass fibre webbing. In some embodiments, the intermediate layer comprises a discontinuous layer, such individually dispersed glass fibres, which are adhered to the first and/or second film.

In some embodiments, the intermediate layer, preferably a continuous or dispersed glass fibre layer, has a weight of at least 5 g/m² to at most 100 g/m², preferably at least 10 g/m² to at most 60 g/m², preferably at least 20 g/m² to at most 40 g/m², for example about 30 g/m².

In some embodiments, the intermediate layer, preferably a continuous or dispersed glass fibre layer, has a thickness of at least 0.05 mm to at most 0.80 mm, preferably at least 0.10 mm to at most 0.60 mm, preferably at least 0.20 mm to at most 0.40 mm, for example about 0.28 mm.

In some embodiments, the intermediate layer, preferably a continuous or dispersed glass fibre layer, has an air permeability of at least 0 l/m².s to at most 15 000 l/m².s. In some embodiments, the glass fibres have a length of at least 4 mm to at most 12 mm, preferably at least 6 mm to at most 10 mm, for example about 8 mm. In some embodiments, the glass fibres have a diameter of at least 4 µm to at most 20 µm, preferably at least 6 µm to at most 18 µm, for example about 12 µm.

In some embodiments, the intermediate layer is impregnated with a binder. In some embodiments, the intermediate layer comprises at least 0% to at most 40% by weight binder, based on the total weight of the intermediate layer, preferably at least 10% by weight to at most 30% by weight, for example about 20% by weight.

The method preferably comprises the step of: a) providing a first batch of recycled PVC material and a second batch of recycled PVC material. The recycled PVC material may come from mechanical recycled PVC waste, such as from flooring, windows, and/or cables.

In some embodiments, the preparation of the recycled PVC material occurs at ambient temperature.

In some embodiments, the preparation of the recycled PVC material is done by mechanical recycling, thereby generating the recycled PVC material as shredded material, as pellets or as powder. In some preferred embodiments, the recycled PVC material is in the form of a powder, preferably a powder with a microparticle size between 10-1000 µm.

In some embodiments, the preparation of the recycled PVC material is done by chemical recycling.

In some embodiments, the origin of the recycled PVC material is post-industrial waste, pre-consumer waste (before/after installation), post-consumer waste, flooring waste, waste from cables or window profiles.

In some embodiments, the first and second blends are extruded together with the blowing agent to form a first and second extrudate. In some preferred embodiments, extrusion will be done with granules of the first and second blend. In some further embodiments, the blowing agent and the first and/or second blend are mixed together to form the granule. In some other embodiments, the first and/or second blends are prepared as granules and are together with the blowing agent, which is not part of the granules, provided to the extruder.

Optionally, the blend of recycled PVC material may be granulated, shredded, and/or powdered into fragments that are smaller than the original size of the recycled PVC material. The blend may be powdered into micronized powder. Optionally, the granulated recycled PVC material may be densified into pelletized recycled PVC material.

In some embodiments, the blend may be enriched with virgin material, such as PVC, filler, and plasticizer; and/or may be enriched with additives.

The method preferably comprises the steps of: b1) mixing the first batch of recycled PVC material with a first blowing agent, the first blowing agent having a predetermined decomposition temperature Td1, to form a first blend; and b2) optionally, mixing the second batch of recycled PVC material with a second blowing agent, the second blowing agent having a predetermined decomposition temperature T_{d2}, to form a second blend.

In some embodiments, the mixing step involves dosing the correct weight percentages and distributing them homogeneously with a hot/cold mixer. For example, the blend is mixed to a temperature of 120°C and cooled back to room temperature.

The method preferably comprises the steps of: c1) mixing and melting, preferably extruding, the first blend, below the decomposition temperature of the first blowing agent T_{d1}, to form a first mixture, preferably a first extrudate; and c2) mixing and melting, preferably extruding the second batch of recycled polyvinyl material or the second blend, below the decomposition temperature of the second blowing agent T_{d2} if present, to form a second mixture, preferably a second extrudate.

The working temperature in steps c1) and/or c2) is preferably from at least 150°C to at most 190°C, for example to at most 185°C, for example to at most 180°C, for example to at most 175°C, for example to at most 170°C. The decomposition temperatures T_{d1} and/or T_{d2} are higher than the working temperatures in steps c1) and c2).

After extruding in steps c1) and/or c2), the first and/or second extrudate may be pelletised. The pellets may be stored and/or transported prior to performing steps d1) and/or d2). In some embodiments, steps d1) and or d2) are performed on previously formed pellets. The process may be a continuous process or a discontinuous process.

The method preferably comprises the steps of: d1) processing, preferably calendering, the first mixture or extrudate, below the decomposition temperature of the first blowing agent T_{d1}, to form a first film; d2) processing, preferably calendering, the second mixture or extrudate, below the decomposition temperature of the second blowing agent T_{d2} if present, to form a second film. The processing steps d1) and/or d2) are preferably pressing steps, preferably calendering steps; even though other pressing methods may be suitable as well.

The working temperature in steps d1) and/or d2) is preferably at least 160°C, but below the decomposition temperature T_{d1} and/or T_{d2}. The decomposition temperatures T_{d1} and/or T_{d2} are higher than the working temperatures in steps d1) and d2).

It will be apparent to the skilled person that the thickness of the films is defined by the parameters of the process, such as the calendering process, in particular by the slit opening of the calender rolls.

After mixing and melting in steps c1) and/or c2), the first and/or second mixture may be pelletised. The pellets may be stored and/or transported prior to performing steps d1) and/or d2). In some embodiments, steps d1) and or d2) are performed on previously formed pellets. The process may be a continuous process or a discontinuous process.

The method preferably comprises the step of: e) adhering the first film to one side of an intermediate layer, and the second film to the opposing side of the intermediate layer, thereby forming a multilayer structure.

This step may be performed using lamination rolls or cooling rolls.

In some embodiments, the two calendered films or layers (the first and second film) are laminated to the glass fibre by high temperature and pressure of the laminating rolls.

The method preferably comprises the step of: f) heating the multilayer structure to a temperature that is higher than decomposition temperature T_{d1} and higher than the decomposition temperature T_{d2}, thereby causing the first film and the second film to expand.

During step f), the first blowing agent is decomposed, resulting in a foamed structure, with increased layer thickness of the first film. During step f), when present, the second blowing agent is decomposed, resulting in a foamed structure, with increased layer thickness of the second film.

In some embodiments, step f) is performed in an oven, such as a thermal-oil oven, or an infrared-heated oven. In a preferred embodiment, step f) is performed in a thermal-oil oven.

In some embodiments, the temperature in step f) is at least 1°C higher than T_{d1}, and at least 1°C higher than T_{d2} if a second blowing agent is present; preferably at least 2°C higher, preferably at least 5°C higher, preferably at least 10°C higher.

In some embodiments, the temperature in step f) is at least 180°C to at most 210°C, for example at least 190°C to at most 200°C, for example about 195°C.

In some embodiments, the temperature in step f) is lower than the melting temperature of the recycled PVC material. In some embodiments, the temperature in step f) is lower than the melting temperature of the first film. In some embodiments, the temperature in step f) is lower than the melting temperature of the second film. In some embodiments, the temperature in step f) is lower than the melting temperature of the first film and lower than the melting temperature of the second film.

In some embodiments, a multilayer PVC floor covering is formed after step f) of the methods as disclosed herein. In some embodiments, the multilayer PVC floor covering comprises at least a backing layer, a first film, an intermediate layer, and a second layer, preferably also a print layer or print pattern and a wear layer. In some embodiments, the multilayer PVC floor covering further comprises a decorative layer, a lacquer layer and/or a needle felt layer.

The final blow ratio may be at least 2.0, preferably at least 2.5, for example at least 3.0 for example at most 4.0.

In some embodiments, the decorative layer is adhered using a knife over roll or a roll over roll or a reverse roll coating method using plastisol as PVC compound.

In some embodiments, the decorative layer is adhered at a gelling drum temperature of at least 140°C to at most 170°C.

In some embodiments, the decorative layer is adhered with a plastisol temperature at coating of at least 24°C to at most 35°C.

In some embodiments, the decorative layer is adhered with tension of substrate of at least 500 N/m to at most 2000 N/m.

In some embodiments, the decorative layer is adhered with a line speed of at least 5 m/min to at most 50 m/min.

In some embodiments, the decorative layer is adhered with push roll pressure of at least 3 bar to at most 10 bar.

In some embodiments, the wear layer is adhered using a knife over roll or a roll over roll or a reverse roll coating method using a PVC plastisol.

In some embodiments, the wear layer is adhered at a gelling drum temperature of at least 140°C to at most 170°C.

In some embodiments, the wear layer is adhered with a plastisol temperature at coating of at least 24°C to at most 35°C.

In some embodiments, the wear layer is adhered with tension of substrate of at least 500 N/m to at most 2000 N/m.

In some embodiments, the wear layer is adhered with a line speed of at least 5 m/min to at most 50 m/min.

In some embodiments, the wear layer is adhered with push roll pressure of at least 3 bar to at most 10 bar.

In some embodiments, the backing layer is adhered in an oven, preferably an oven with adjustable zones, for example an oven with 7 adjustable zones or more, such as 14 adjustable zones.

In some embodiments, the backing layer is adhered using a knife over roll or a roll over roll or a reverse roll coating method.

In some embodiments, the backing layer is adhered at a gelling drum temperature of at least 140°C to at most 170°C.

In some embodiments, the backing layer is adhered with a plastisol temperature at coating of at least 24°C to at most 35°C.

In some embodiments, the backing layer is adhered with tension of substrate of at least 500 N/m to at most 2000 N/m.

In some embodiments, the backing layer is adhered with a line speed of at least 5 m/min to at most 50 m/min.

In some embodiments, the backing layer is adhered with push roll pressure of at least 3 bar to at most 10 bar.

In a second aspect, the invention relates to an apparatus or production line for manufacturing a multilayer PVC floor covering intermediate sheet or a multilayer PVC floor covering, wherein the apparatus or production line is configured for performing a method according to the first aspect, and (preferred) embodiments thereof. (Preferred) embodiments of the second aspect are also (preferred) embodiments of the first aspect, and vice versa.

The apparatus or production line preferably comprises a section configured for mixing and melting the first and/or second blend. The apparatus or production line preferably comprises a first extruder and a second extruder, optionally also comprising a pelletiser.

The apparatus or production line preferably comprises a section configured for processing the first and/or second mixture (preferably the first and/or second extrudate). The apparatus or production line preferably comprises calender rolls following the first extruder, for example 2 calender rolls. The apparatus or production line preferably comprises calender rolls following the second extruder, for example 2 or 3 calender rolls. The apparatus or production line preferably comprises a guiding system to a lamination point, preferably following the calender rolls. The apparatus or production line preferably comprises a lamination station, preferably configured to laminate the layers at the lamination point. The lamination station may comprise lamination rolls or cooling rolls.

In a third aspect, the invention relates to a multilayer PVC floor covering intermediate sheet or a multilayer PVC floor covering obtained by the method according to the first aspect, and (preferred) embodiments thereof; or obtained by using the apparatus or production line according to the second aspect, and (preferred) embodiments thereof. (Preferred) embodiments of the third aspect are also (preferred) embodiments of the first aspect and/or the second aspect, and vice versa.

In some preferred embodiments, the multilayer PVC floor covering intermediate sheet comprises:
- a first expanded film;
- an intermediate layer; and,
- a second, optionally expanded, film.

Preferably, these 3 layers are the minimal number of layers. It is understood that various additional layers may be added, and/or that each of these layers may comprise various sublayers.

For example, the multilayer PVC floor covering intermediate sheet may also comprise a decorative layer, a print layer and/or a wear layer on one side of the PVC floor covering intermediate sheet, thereby forming the multilayer PVC floor covering.

For example, the multilayer PVC floor covering or multilayer PVC floor covering intermediate sheet may also comprise a backing layer on another side of the cushion vinyl floor covering.

In some embodiments, the PVC floor covering intermediate sheet or the PVC floor covering has a weight of at least 500 g/m² to at most 10000 g/m², preferably at least 1000 g/m² to at most 5000 g/m².

In some embodiments, the PVC floor covering intermediate sheet or the PVC floor covering has a thickness of at least 0.8 mm to at most 10 mm, preferably at least 0.8 mm to at most 4.10 mm.

The PVC floor covering intermediate sheet and the PVC floor covering as disclosed herein are both compliant with any of the following standards (non-limitative list): EN ISO 24346 (total thickness), EN ISO 23997 (total weight), EN ISO 23999 (dimensional stability), EN ISO 23999 (curling), EN ISO 24343-1 (residual indentation), DIN 51130 (slip resistance).

### EXAMPLES

The following examples serve to merely illustrate the invention and should not be construed as limiting its scope in any way. While the invention has been shown in only some of its forms, it should be apparent to those skilled in the art that it is not so limited, but is susceptible to various changes and modifications without departing from the scope of the invention.

**FIG. 1A** illustrates a cross-section of a multilayer cushion vinyl floor covering (100') manufactured according to the prior art. The multilayer cushion vinyl floor covering (100') comprises, from top to bottom: a wear layer (160), a print layer (150), a decorative layer which may be optionally foamed (140, 141), an intermediate layer (130) comprising a glass fibre (131) or PET layer and an impregnation layer (132) on the side of the decorative layer (140, 141), a backing layer (180), and optionally a needle felt layer (190).

**FIG. 1B** illustrates a cross-section of a multilayer PVC floor covering (100) manufactured according an embodiment of the invention. The multilayer cushion vinyl floor covering (100) comprises, from top to bottom: a wear layer (160), a print layer (150), a decorative layer which may be optionally foamed (140, 141), an expanded second film comprising recycled PVC together with plasticizer, filler, additives (121), an intermediate layer (130) comprising a glass fibre or PET layer (131), an expanded first film comprising recycled PVC (111), and optionally, a backing layer (180) that can optionally comprise recycled PVC, and optionally a needle felt layer (190). The entire multilayer cushion vinyl floor covering (100) comprises a percentage of recycled PVC calculated as follows: sum of the weight of recycled PVC in all layers divided by the total weight of the multilayer PVC floor covering (100).

**FIG. 1C** illustrates a cross-section of a multilayer PVC floor covering (100) manufactured according an embodiment of the invention. The multilayer PVC floor covering (100) comprises, from top to bottom: a lacquer layer (170), a wear layer (160), a print layer (150), a decorative layer which may be optionally foamed (140, 141), an expanded second film comprising recycled PVC (121), an intermediate layer (130) comprising a glass fibre or PET layer (131), an expanded first film comprising recycled PVC (111), and (optionally) a backing layer (180) (optionally) comprising recycled PVC, and optionally a needle felt layer (190). The entire multilayer PVC floor covering (100) comprises a percentage of recycled PVC calculated as follows: sum of the weight of recycled PVC in all layers, divided by the total weight of the multilayer PVC floor covering (100).

**FIG. 2** illustrates a microscopic view of a transversal section of a multilayer PVC floor covering intermediate sheet (101) manufactured according to an embodiment of the invention. The multilayer PVC floor covering intermediate sheet (101) comprises an intermediate layer (130) that consists of a glass fibre layer (131). The multilayer PVC floor covering intermediate sheet (101) further comprises a first film (111) and a second film (121) that are adhered to the glass fibre intermediate layer (131) by calendering the two films onto the glass fibre using pressure and heat. A decorative layer (141) and a wear layer (160) were then adhered to the second film (121) using knife-over-roll coating. During the manufacture, the multilayer structure was placed in an oven at a temperature between 195°C to 210°C to expand/foam the first film and the second film and the decorative layer; thereby forming a multilayer structure (100) comprising an expanded first film (111) on one side of the intermediate layer (131) and an expanded second film (121), and expanded decorative layer (141) and a wear layer (160) on the other side of the intermediate layer (131). The decor layer is foamed simultaneously with the other layers in the oven.

**FIG. 3** illustrates a schematic view of steps a)-d) of method according to an embodiment of the invention. On the right-hand side, a first batch of recycled PVC material (10) is mixed with a first blowing agent (51) to form a first blend (12). This first blend (12) is extruded to form a first extrudate (14), for example with a diameter of 8 cm. This first extrudate (14) is calendered over 2 rolls to form a first film (110) and guided to a lamination point. On the left-hand side, a second batch of recycled PVC material (20) is mixed with a second blowing agent (52) to form a second blend (22). This second blend (22) is extruded to form a second extrudate (24), for example also with a diameter of 8 cm. This second extrudate (24) is calendered over 3 rolls to form a second film (120) and guided to a lamination point. At the lamination point, the first film (110) and the second film (120) are laminated onto the intermediate layer (130). The lamination may be assisted by using lamination rolls or cooling rolls (not illustrated in **FIG. 3**). **FIG. 3A** illustrates how the blends (12,22) are formed in the extruders by feeding the blowing agents (51,52) and recycled PVC material (10,20) separately to the extruders. **FIG. 3B** illustrates how premixed blends (12,22), already comprising the blowing agent and recycled material, may be fed directly into the extruders. The first extrudate and the second extrudate go directly into the calender bank.

While **FIG. 3** illustrates a vertical process, any other angle may be used, for example a horizontal process is also possible. For example, glass fibres or filaments may be scattered on the first or second film to form a discontinuous intermediate layer, after which the other of the first or second film is laminated on top.

## Claims

1. A method for manufacturing a multilayer polyvinyl chloride floor covering intermediate sheet, the multilayer polyvinyl chloride (PVC) floor covering intermediate sheet comprising recycled polyvinyl chloride material, the method comprising the steps of:
a) providing a first batch of recycled PVC material and a second batch of recycled PVC material;
b1) mixing the first batch of recycled PVC material with a first blowing agent, the first blowing agent having a predetermined decomposition temperature T_{d1}, to form a first blend;
b2) optionally, mixing the second batch of recycled PVC material with a second blowing agent, the second blowing agent having a predetermined decomposition temperature T_{d2}, to form a second blend;
c1) mixing and melting the first blend, below the decomposition temperature of the first blowing agent T_{d1}, to form a first mixture;
c2) mixing and melting the second batch of recycled polyvinyl chloride material or the second blend, below the decomposition temperature of the second blowing agent T_{d2} if present, to form a second mixture;
d1) processing the first mixture, below the decomposition temperature of the first blowing agent T_{d1}, to form a first film;
d2) processing the second mixture, below the decomposition temperature of the second blowing agent T_{d2} if present, to form a second film;
e) adhering the first film to one side of an intermediate layer, and the second film to the opposing side of the intermediate layer, thereby forming a multilayer structure; and,
f) heating the multilayer structure to a temperature that is higher than decomposition temperature T_{d1} thereby causing the first film to expand, optionally also higher than the decomposition temperature T_{d2} thereby causing the second film to expand;
thereby forming a multilayer PVC floor covering intermediate sheet.

2. The method according to claim 1, further comprising the steps of:
b2) mixing the second batch of recycled PVC material with a second blowing agent, the second blowing agent having a predetermined decomposition temperature T_{d2}, to form a second blend;
c2) mixing and melting the second blend below the decomposition temperature of the second blowing agent T_{d2}, to form a second mixture;
d2) processing the second mixture, below the decomposition temperature of the second blowing agent T_{d2}, to form a second film; and,
f) heating the multilayer structure to a temperature that is higher than decomposition temperature T_{d1} and higher than the decomposition temperature T_{d2}, thereby causing the first film and the second film to expand.

3. The method according to claim 1, wherein the second batch of recycled PVC material is not mixed with a second blowing agent.

4. The method according to any one of claims 1 to 3, wherein the recycled PVC material comprises at least 20% recycled PVC based on the total weight of the recycled PVC material; preferably at least 30% recycled PVC, preferably at least 40% recycled PVC, for example at least 50% recycled PVC.

5. The method according to any one of claims 1 to 4, wherein the multilayer PVC floor covering intermediate sheet comprises at least 50% recycled PVC material, based on the total weight of the multilayer PVC floor covering intermediate sheet, preferably at least 70% recycled PVC material, preferably at least 90% recycled PVC material, for example at least 95% recycled PVC material.

6. The method according to any one of claims 1 to 5, wherein the first and/or second film each comprise at least 50% recycled PVC material, based on the total weight of the first or second film respectively, preferably at least 70% recycled PVC material, preferably at least 90% recycled PVC material, for example at least 98% recycled PVC material.

7. The method according to any one of claims 1 to 6, wherein:
- in step d1) the first mixture is calendered below the decomposition temperature of the first blowing agent T_{d1}, to form the first film; and/or
- in step d2), the second mixture is calendered below the decomposition temperature of the second blowing agent T_{d2}, to form the second film.

8. The method according to any one of claims 1 to 7, wherein:
- in step c1) the first blend is extruded below the decomposition temperature of the first blowing agent T_{d1}, to form a first extrudate; and in step d1) the first extrudate is processed below the decomposition temperature of the first blowing agent T_{d1}, to form the first film; and/or
- in step c2), the second batch of recycled PVC material or the second blend, is extruded below the decomposition temperature of the second blowing agent T_{d2} if present, to form a second extrudate; and in step d2) the second extrudate is processed below the decomposition temperature of the second blowing agent T_{d2} if present, to from the second film.

9. The method according to any one of claims 1 to 8, wherein step e) comprises the step of adhering a decorative layer to the second film, to form a multilayer structure, prior to performing step f).

10. The method according to any of claims 1 to 9, wherein step e) comprises the step of adhering a print layer or print pattern to the second film or to the decorative layer, and optionally comprises the step of adhering a wear layer to the print layer, to form a multilayer structure, prior to performing step f).

11. The method according to any one of claims 1 to 10, wherein step e) comprises the step of adhering a backing layer to the first film, to form a multilayer structure, prior to performing step f); and wherein after step f) a multilayer PVC floor covering is formed.

12. The method according to any one of claims 1 to 11, wherein the intermediate layer comprises glass fibres or PET.

13. The method according to any one of claims 1 to 12, wherein the first and/or second blowing agent is selected from the group comprising: azodicarbonamide (AZO), 4,4-oxy-bis(benzenesulfonylhydrazide) (OBSH), P-toluenesulfonyl-hydrazide (TSH), P-tolyenesulfonylsemicarbazide (PTSS), dinitrosopentamethylenetetramine (DNPT), sodium bicarbonate, 5-phenyltetrazole (PT), or any combinations thereof; preferably wherein the first and/or second blowing agent is AZO

14. Apparatus for manufacturing a multilayer PVC floor covering intermediate sheet or a multilayer PVC floor covering, wherein the apparatus is configured for performing a method according to any one of claims 1 to 13.

15. A multilayer PVC floor covering intermediate sheet or a multilayer PVC floor covering obtained by the method according to any one of claims 1 to 13.
